# EUROPÄISCHE PATENTANMELDUNG

(11) **EP 1 178 382 A2**
(43) Veröffentlichungstag der Anmeldung: **06.02.2002**
(21) Anmeldenummer: 01117985.0
(22) Anmeldetag: 25.07.2001
(51) Int. Cl.: G05D 16/20

(54) **Magnetventil, insbesondere Druckregelventil**

(30) Priorität: 03.08.2000 DE 10037793
(71) Anmelder: Hydraulik-Ring GmbH, 09212 Limbach-Oberfrohna (DE)
(72) Erfinder: Neuhaus, Rolf, Dr., 97816 Lohr (DE); Urlaub, Bernd, 97854 Steinfeld (DE); Zapf, Friedrich, 97753 Karlstadt (DE)
(74) Vertreter: Kohl, Karl-Heinz

(57) **Zusammenfassung**

Das Magnetventil hat einen Magnetanker (2), mit dem über einen Stößel (19) ein Schieber (29) gegen eine Gegenkraft verschiebbar ist. Um eine optimale Funktion des Ventils zu gewährleisten, hat der Stößel (19) kleineren Querschnitt als die mit ihm zusammenwirkende Kolbenfläche (36) des Schiebers (29). Er weist einen Hydraulikraum (40) auf, der mit einem Arbeitsanschluß (A) und einem Druckanschluß (P) verbunden werden kann. Mit einem kleinen Magneten können große Querschnittsflächen am Schieber (29) gesteuert werden, ohne daß eine Vorsteuerung mit Steuerölverlusten erforderlich ist. Das Magnetventil kann bei Automatikgetrieben oder CVT-Getrieben eingesetzt werden

## Beschreibung

Die Erfindung betrifft ein Magnetventil, insbesondere ein Druckregelventil, nach dem Oberbegriff des Anspruches 1 bzw. 9.

Bei einem bekannten Magnetventil ist im Magnetanker ein Stößel befestigt, der als Schließelement des Ventils ausgebildet ist und den Durchfluß von einem an eine Druckmittelquelle angeschlossenen Druckanschluß zu einem mit einem Tank bzw. Niederdruckraum verbundenen Anschluß steuert. Der Magnetanker trennt zwei Ankerräume voneinander, die über einen durch den Magnetanker und den Stößel sich erstreckenden Kanal miteinander verbunden sind. Dadurch werden Ablagerungen von Schmutzpartikeln, die die Funktionsfähigkeit des Magnetventils beeinträchtigen könnten, vermieden.

Der Erfindung liegt die Aufgabe zugrunde, das gattungsgemäße Magnetventil so auszubilden, daß eine optimale Funktion des Ventils gewährleistet ist.

Diese Aufgabe wird beim gattungsgemäßen Magnetventil erfindungsgemäß mit den kennzeichnenden Merkmalen des Anspruches 1 bzw. 9 gelöst.

Beim erfindungsgemäßen Magnetventil gemäß Anspruch 1 können mit einem verhältnismäßig kleinen Magneten große Querschnittsflächen am Schieber gesteuert werden, ohne daß eine Vorsteuerung mit Steuerölverlusten erforderlich ist. Der Hydraulikraum des Schiebers ist mit dem Arbeitsanschluß verbunden. Wird das Magnetventil bestromt, wird der Schieber über den Magnetanker und den Stößel so verschoben, daß der Arbeitsanschluß mit dem Druckanschluß verbunden wird. Das erfindungsgemäße Magnetventil kann vorzugsweise bei Automatikgetrieben oder CVT-Getrieben eingesetzt werden.

Beim Magnetventil gemäß Anspruch 9ist der Schieber immer hydraulisch eingespannt. Von einer Seite wirkt der Versorgungsdruck des Hydraulikmediums, während der Schieber von der anderen Seite durch den Rückführdruck belastet wird. Entsprechend der Druckdifferenz wird der Schieber stets entsprechend dem Vorsteuerdruck nachgeschoben. Die Nachführung des Schiebers, auch bei Verschmutzung und damit auch höheren Reibkräften, ist optimal. Aufgrund der Druckuntersetzung zwischen dem Versorgungsdruck und dem maximalen Vorsteuerdruck wird das erfindungsgemäße Magnetventil trotz ausreichend hoher Stellkräfte am Schieber optimal stabilisiert.

Weitere Merkmale der Erfindung ergeben sich aus den weiteren Ansprüchen, der Beschreibung und der Zeichnung.

Die Erfindung wird anhand zweier in den Zeichnungen dargestellter Ausführungsbeispiele näher erläutert. Es zeigen
- Fig. 1: im Schnitt eine erste Ausführungsform eines erfindungsgemäßen Magnetventils,
- Fig. 2: im Schnitt eine zweite Ausführungsform eines erfindungsgemäßen Magnetventils.

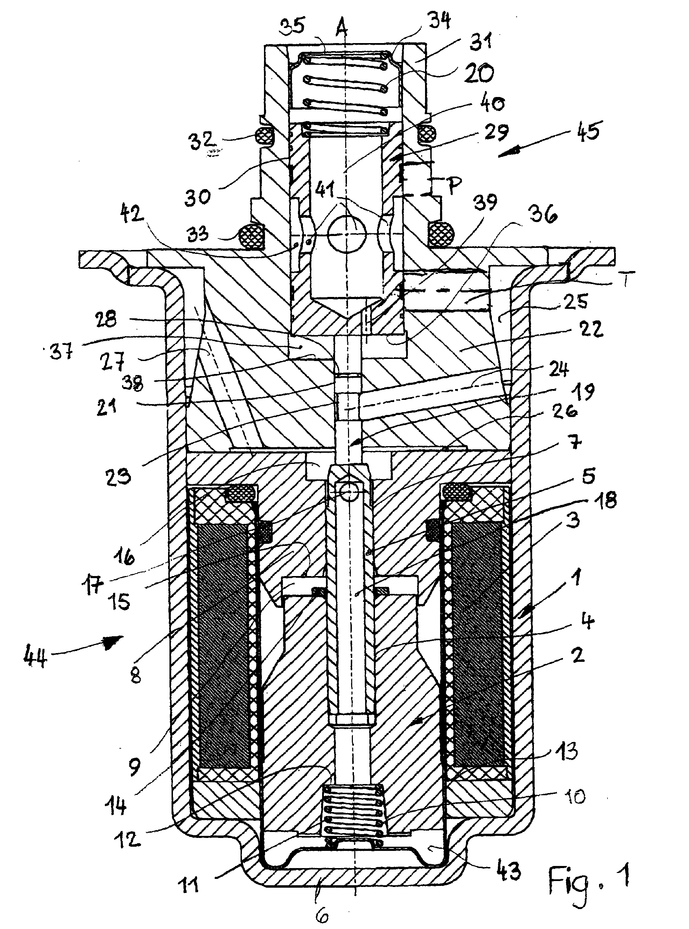

Das Magnetventil gemäß Fig. 1 hat ein kappenförmiges Gehäuse 1, in dem ein Magnetanker 2 verschiebbar ist. Der Magnetanker 2 wird von einer im Gehäuse 1 untergebrachten Spule 3 umgeben. In einer zentralen Bohrung 4 des Magnetankers 2 ist eine Buchse 5 befestigt, die an ihrem dem Boden 6 des Gehäuses 1 zugewandten Ende offen ist. Die Buchse 5 ragt axial über den Magnetanker 2 durch eine Bohrung 7 in einem Magnetjoch 8.

Das Magnetjoch 8 weist eine zentrale Vertiefung 9 auf, in die der Magnetanker 2 mit seinem einen Ende ragt. Am gegenüberliegenden Ende ist der Magnetanker 2 mit einer Vertiefung 10 versehen, die eine Druckfeder 11 aufnimmt. Sie stützt sich mit einem Ende am Boden 12 der Vertiefung 10 und mit ihrem anderen Ende auf dem Boden einer napfförmigen Isolierung 13 ab. Sie trennt den Magnetanker 2 von der Spule 3.

Auf dem in die Vertiefung 9 des Magnetjoches 8 ragenden Ende des Magnetankers 2 sitzt eine Dichtung 14, die die Buchse 5 umgibt und die bei verschobenem Magnetanker 2 dichtend am Boden 15 der Vertiefung 9 des Magnetjoches 8 anliegt.

Das Magnetjoch 8 ist an seiner vom Magnetanker 2 abgewandten Stirnseite mit einer Vertiefung 16 versehen, in welche die Buchse 5 ragt. Ihr in dieser Vertiefung 16 liegendes Ende ist geschlossen. Benachbart zu diesem Ende ist die Buchse 5 mit mindestens einer Querbohrung 17 versehen, die die Vertiefung 16 mit dem Innenraum 18 der Buchse 5 verbindet.

An der Stirnseite der Buchse 5 liegt ein Stößel 19 an, der auf der Stirnseite der Buchse 5 befestigt sein kann. Es ist aber auch möglich, daß der Stößel 19 lediglich unter der Kraft einer Druckfeder 20 stirnseitig an der Buchse 5 anliegt. Der Stößel 19 ist in einer Bohrung 21 eines Gehäuseteiles 22 geführt. Der Stößel 19 weist umfangsseitig eine Ringnut 23 auf, die mit einem den Gehäuseteil 22 durchsetzenden Kanal 24 in Verbindung steht. Über diesen Kanal 24 wird die Ringnut 23 mit einem Ringraum 25 leitungsverbunden, der den Gehäuseteil 22 umgibt und der mit dem Tank verbunden ist.

Der Gehäuseteil 22 weist auf seiner dem Magnetjoch 8 zugewandten Stirnseite eine flache Vertiefung 26 auf, die über einen weiteren, den Gehäuseteil 22 durchsetzenden Kanal 27 mit dem Ringraum 25 leitungsverbunden ist.

Der über wenigstens eine Ringdichtung 28 in der Bohrung 21 abgedichtet geführte Stößel 19 ist mit einem Hohlkolben 29 verbunden. Der Stößel 19 kann am Hohlkolben 29 anliegen oder fest mit ihm verbunden sein. Der Hohlkolben 29 bildet einen Schieber, der abgedichtet in einer Bohrung 30 eines Ansatzes 31 des Gehäuseteiles 22 verschiebbar geführt ist. Mit dem Ansatz 31 wird das Magnetventil in eine (nicht dargestellte) Bohrung eines Bauteiles eingesetzt, in dem der Ansatz 31 über zwei mit axialem Abstand angeordnete Ringdichtungen 32, 33 abgedichtet sitzt.

An dem vom Stößel 19 abgewandten Ende greift das eine Ende der Druckfeder 20 an, die sich mit ihrem anderen Ende an einem in den Ansatz 31 eingesetzten Abschlußelement 34 abstützt. Es sitzt fest im Ansatz 31 und hat eine zentrale Öffnung 35.

Der Hohlkolben 29 begrenzt mit seiner stößelseitigen Stirnseite 36 einen Hydraulikraum 37, der am gegenüberliegenden Ende durch den Boden 38 der Bohrung 30 begrenzt wird. Der Hydraulikraum 37 wird vom Stößel 19 zentral durchsetzt, der kleineren Querschnitt hat als der Hohlkolben 29 am stößelseitigen Ende. Der Hydraulikraum 37 ist durch wenigstens eine axiale Bohrung 39 mit dem Innenraum 40 des Hohlkolbens 29 verbunden. Mit Abstand von der Stirnseite 36 ist der Innenraum 40 des Hohlkolbens 29 mit einer außenseitigen Ringnut 42 verbunden.

Der Gehäuseansatz 31 hat einen radialen Druckanschluß P, der bei nicht erregtem Magneten durch den Hohlkolben 29 geschlossen ist. Wird der Elektromagnet bestromt, wird der Magnetanker 2 gegen die Kraft der Druckfeder 20 axial verschoben. Der Magnetanker 2 verschiebt über die Buchse 5 und den Stößel 19 den Hohlkolben 29. Die Ringnut 42 wird dadurch mit dem Druckanschluß P verbunden, so daß das unter Druck stehende Hydraulikmedium über die Querbohrungen 41 in den Innenraum 40 des Hohlkolbens 29 gelangen kann. Von dort strömt das Hydraulikmedium über die Öffnung 35 im Abschlußelement 34 zum Arbeitsanschluß A und damit zum entsprechenden Verbraucher.

Der Gehäuseraum 9 ist über die Buchse 5 und den Magnetanker 2 mit einem Ankerraum 43 leitungsverbunden. Am stirnseitigen A-Anschluß wirkt der Regeldruck. Je nach Stellung des Hohlkolbens 29 bei bestromtem Elektromagneten wird der Druckanschluß P mehr oder weniger weit geöffnet. Im Magnetbereich ist der T-Anschluß, der mit dem Ringraum 25 verbunden ist.

Der Hydraulikraum 37 ist mit dem am A-Anschluß wirkenden Druck beaufschlagt, da er über die Bohrung 39 und den Innenraum 40 des Hohlkolbens 29 mit dem Arbeitsanschluß A verbunden ist. Dadurch wirkt im Endeffekt nur auf die Fläche des Stößels 19 der Regeldruck, der mit der Magnetkraft des Magnetteils 44 des Magnetventils verglichen wird. Die Übersetzung auf die wesentlich größere Stirnfläche 36 des Hohlkolbens 29 dient dazu, eine Ölvolumenkontrolle durch den Hohlkolben 12 zu erzielen. Die Strömungskräfte am Hohlkolben 29 werden über den Magnetteil 44 und die Druckbiegefläche vom Stößel 19 aufgenommen. Das Magnetventil ist als Druckregelventil ausgebildet, bei dem der Hohlkolben 29 den Regeldruck am Arbeitsanschluß A über die Steuerkanten am Druckanschluß P bzw. am Tankanschluß T zum Innenraum 40 des Hohlkolbens 29 steuert. Die beiden Druckfedern 11, 20 dienen dazu, den Hohlkolben 29 und den Magnetanker 2 vorzuspannen, um den Totbereich der DruckStromstärke-Kennlinie des Magnetventils möglichst klein zu halten.

Der am Arbeitsanschluß A anstehende Hydraulikdruck wird aufgrund der unterschiedlichen, vom Hydraulikmedium beaufschlagten Flächen am Hohlkolben 29 und am Stößel 19 im Hydraulikraum 37 über die Wiegefläche des Stößels geregelt. Über den Kanal 27 ist der Ringraum 25 mit dem Hydraulikraum 16 verbunden. Der Ringraum 25 ist über den Tankanschluß T mit dem Tank leitungsverbunden. Der Stößel 19 ist außerdem zwischen der hydraulischen Hauptstufe und dem Magnetteil 44 durch den Kanal 24 entkoppelt, der den Ringkanal 23 des Stößels 19 mit dem Ringraum 25 verbindet. Dadurch werden Schmutzpartikel, die aus dem Hauptsteuerbereich mit dem Hohlkolben 29 in den Magnetbereich kommen, über diesen Kanal 24 in den Ringraum 25 und damit zum Tank T zurückgeführt. Der Druckabfall über dem Stößel 19 vom Arbeitsanschluß A zum Magnetteil 44 hin wird darum über diesen Kanal 24 herabgesetzt.

Im übrigen ist der Magnetteil 44 des Magnetventils einwandfrei fluidisch gekapselt.

Aufgrund der beschriebenen Ausbildung können mit einem relativ kleinen Magneten große Querschnittsflächen am Hohlkolben 29 gesteuert werden, ohne daß eine echte Vorsteuerung mit Steuerölverlusten vorgesehen ist. Das Magnetventil ermöglicht große gesteuerte Mengen, ohne daß die Gefahr einer Verschmutzung auftritt. Das Magnetventil kann hervorragend im Automatik- oder CVT-Getriebe eingesetzt werden. Der Magnetteil 45 des Magnetventils ist als Hauptstufe in das Magnetventil integriert.

Der Ausgleich der Flüssigkeitsvolumina zwischen den beiden Hydraulikräumen 16 und 43 beim Schalten des Magnetventils erfolgt dadurch, daß das Hydraulikmedium über die Querbohrung 17 und den Innenraum 18 der Buchse 5 hin- und herbewegt wird. Da der Innenraum 18 der Buchse 5 und der anschließende Bereich der Bohrung 4 im Magnetanker 2 verhältnismäßig lang sind, können Schmutzteilchen zuverlässig aufgefangen werden, so daß sie nicht zu einer Funktionsstörung des Magnetventils stören können.

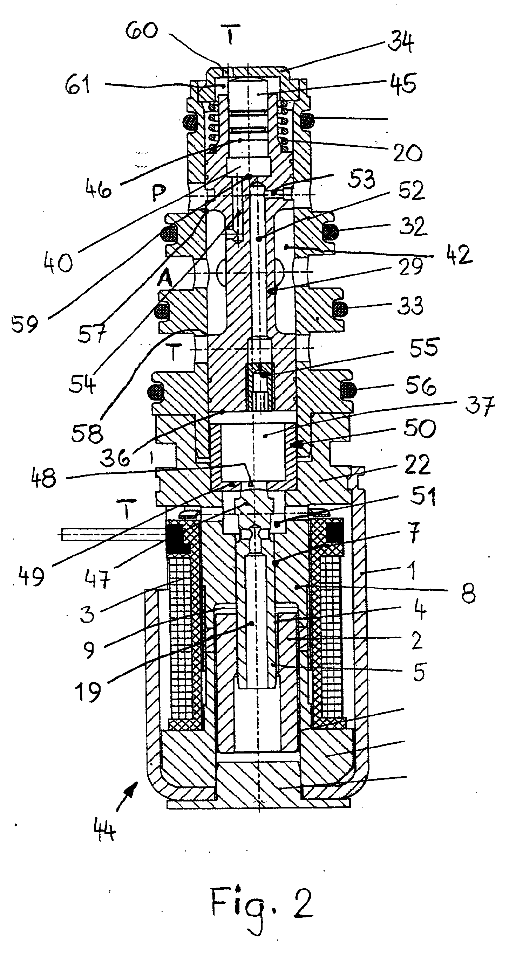

Das Magnetventil gemäß Fig. 2 ist ein vorgesteuertes Druckventil, bei dem der Schieber 29 von beiden Seiten stets hydraulisch vorgespannt ist. Beim Ausführungsbeispiel nach Fig. 1 ist der Schieber 29 lediglich durch die Druckfeder 20 vorgespannt. Um die hydraulische Vorspannung des Schiebers 29 zu erreichen, sitzt in dem dem Abschlußelement 34 benachbarten Ende des Schiebers 29 ein Zusatzkolben 45, der unter Hydraulikdruck am Abschlußelement 34 anliegt und abgedichtet im Schieber 29 gelagert ist. Der Zusatzkolben 45 begrenzt den Innenraum 40 des Schiebers 29, der unter der Kraft der Druckfeder 20 in Richtung auf den Magnetteil 44 belastet ist. Der Zusatzkolben 45 hat eine Druckfläche 46, die kleiner ist als die gegenüberliegende Stirnseite 36 des Schiebers 19. Beispielsweise kann die Druckfläche 46 des Zusatzkolbens 45 nur halb so groß wie die Stirnseite 36 sein. Die Druckfläche 46 kann beispielsweise auch nur ein Drittel oder ein Fünftel der Fläche der Stirnseite 36 des Schiebers 29 betragen. Dadurch kann der Vorsteuerdruck, der auf die Stirnseite 36 des Schiebers 29 wirkt, auch nur mit einem entsprechend kleineren Versorgungsdruck arbeiten. Dies trägt nicht nur zur besseren Nachführung des Schiebers 29 bei, zum Beispiel bei Verschmutzung und/oder höheren Reibkräften, sondern dient auch zur höheren Stabilisierung aufgrund der Druckuntersetzung vom Vorsteuerdruck zum Versorgungsdruck. Dadurch ergibt sich eine geringe Kraftverstärkung und eine hohe Stabilität. Die bei herkömmlichen vorgesteuerten Druckregelventilen aufgrund der internen hohen Kraftverstärkung zu beobachtende Instabilität tritt bei diesem Magnetventil nicht auf, ohne daß die Stellkräfte, die auf den Schieber 29 wirken, so klein werden, daß der Schieber klemmen könnte. Je nach den Flächenverhältnissen von Druckfläche 46 des Zusatzkolbens 44 und Druckfläche 36 des Schiebers 29 kann die Druckuntersetzung stattfinden.

Das Magnetteil 44 hat das Gehäuse 1, das den Magnetanker 2 und die ihn umgebende Spule 3 aufnimmt. Der Magnetanker 2 ragt in die Vertiefung 9 des Magnetjoches 8. In der zentralen Bohrung 4 sitzt die Buchse 5, die außerdem durch die Bohrung 7 des Magnetjochs 8 ragt. In der Buchse 5 befindet sich der Stößel 19 in Form eines Stützstiftes, der an seinem axial über die Buchse 5 ragenden Ende ein Verschlußelement 47 trägt, mit dem eine zentrale Öffnung 48 im Boden 49 eines Napfes 50 verschließbar ist. Er begrenzt den Hydraulikraum 37, der am anderen Ende durch die Stirnseite 36 des Schiebers 29 begrenzt ist. Das Verschlußelement 47 liegt in einem Hydraulikraum 51, der zwischen dem Boden 49 des Napfes 50 und dem Magnetjoch 8 vorgesehen ist und in den der Tankanschluß T mündet.

Der Schieber 29 hat eine axiale Bohrung 52, die gegen den Innenraum 40 geschlossen ist. In die Bohrung 52 mündet nahe dem Hohlraum 40 wenigstens eine Querbohrung 53, durch welche die Bohrung 52 mit dem Druckanschluß P verbunden ist.

Der Schieber 29 ist mit einer Ringnut 42 versehen, die einen entsprechenden Ringraum bildet, in den wenigstens ein Arbeitsanschluß A mündet. In den Ringraum 42 mündet eine Bohrung 54, die im Schieber 29 vorgesehen ist und den Ringraum 42 mit dem Innenraum 40 verbindet.

Die Bohrung 52 ist nahe dem Hydraulikraum 37 mit einer düsenartigen Verengung 55 versehen. Über die Bohrung 52 ist der Hydraulikraum 37 mit der Querbohrung 53 leitungsverbunden.

Der Gehäuseteil 22 des Magnetventils wird entsprechend der vorigen Ausführungsform in eine (nicht dargestellte) Bohrung eines Bauteiles eingesetzt, in dem der Gehäuseteil 22 über drei mit axialem Abstand angeordnete Ringdichtungen 32, 33, 56 abgedichtet sitzt.

In der in Fig. 2 dargestellten Lage liegt das Verschlußelement 47 dichtend am Boden 49 des Napfes 50 an und verschließt die Öffnung 48. Somit ist der Hydraulikraum 37 vom Tankanschluß T getrennt. Der Schieber 29 nimmt eine Mittelstellung ein, in welcher der Arbeitsanschluß A vom Druckanschluß P und vom Tankanschluß T im Gehäuseteil 22 getrennt ist. Der Schieber 29 ist stets druckeingespannt durch den auf die Stirnseite 36 wirkenden Steuerdruck und durch den auf die Druckfläche 46 des Zusatzkolbens 45 in entgegengesetzter Richtung wirkenden Rückführdruck. Der Rückführdruck wird unterstützt durch die Kraft der Druckfeder 20, die in gleicher Richtung wie der Rückführdruck wirkt. Durch diese Druckeinspannung ist eine gute Nachführung des Schiebers 29 auch bei Verschmutzung und damit höheren Reibkräften gewährleistet.

Die beiden Hauptsteuerkanten 57 und 58 am Schieber 29 steuern den Druck vom Druckanschluß P zum Arbeitsanschluß A bzw. vom Arbeitsanschluß A zum Tankanschluß T des Gehäuseteiles 22.

Durch den auf die Druckfläche 46 wirkenden Hydraulikdruck im Innenraum 40 wird der Zusatzkolben 45 stets gegen das Abschlußelement 34 gedrückt, das mit wenigstens einer Öffnung 60 versehen ist. Über sie ist ein zwischen dem Schieber 29 und dem Abschlußelement 34 befindlicher Hydraulikraum 61 mit dem Tank T verbunden. Außerdem wirkt das Hydraulikmedium auf den Boden 59 des Innenraumes 40, wodurch der Schieber 29 in Richtung auf das Magnetteil 44 belastet wird. Über diesen Druck wird der Schieber 29 immer entsprechend dem Vorsteuerdruck im Hydraulikraum 37 nachgeschoben. Der Boden 59 des Innenraumes 40 des Schiebers 29 hat eine kleinere Fläche als die gegenüberliegende Stirnseite 36 des Schiebers 29.

Das Magnetventil arbeitet normal über Vorsteuerung mit dem Versorgungsdruck P. Über die Querbohrung 53 gelangt das unter Druck stehende Hydraulikmedium in die axiale Bohrung 52 des Schiebers 29. Über die Düse 55 gelangt das unter Druck stehende Hydraulikmedium in den Hydraulikraum 37. Die Ablaßsteuerung erfolgt über das Verschlußelement 47 des Magnetteils 44. Da auf die Stirnseite 36 des Schiebers 29 eine größere Kraft wirkt als auf die gegenüberliegende Fläche des Bodens 59 des Hohlraumes 40 zuzüglich der Kraft der Druckfeder 20, wird der Schieber 29 aus der in Fig. 2 dargestellten Lage gegen die Kraft der Druckfeder 20 verschoben. Die Steuerkante 57 öffnet den Druckanschluß P, so daß das unter Druck stehende Hydraulikmedium über den Ringraum 42 zum Arbeitsanschluß A gelangen kann. Gleichzeitig wird durch die Steuerkante 58 der Tankanschluß T gegen den Arbeitsanschluß A geschlossen. Die Rückführung des Hydraulikmediums erfolgt über die Bohrung 54 auf die Stirnfläche 46 des Zusatzkolbens 45. Dadurch wird in der beschriebenen Weise der Schieber 29 stets entsprechend dem Vorsteuerdruck im Hydraulikraum 37 nachgeschoben.

Wird der Magnetteil 44 betätigt, wird der Stößel 19 mit dem Verschlußelement 47 zurückgefahren, wodurch die Öffnung 48 im Boden 49 des Napfes 50 freigegeben wird. Das Hydraulikmedium im Hydraulikraum 37 kann dann über die Öffnung 48 zum Tankanschluß T zurückströmen. Dementsprechend wird der Schieber 29 aufgrund des Druckabfalls im Hydraulikraum 37 in Fig. 2 nach unten geschoben, wodurch die Verbindung zwischen dem Druckanschluß P und dem Arbeitsanschluß A geschlossen und die Verbindung vom Arbeitsanschluß A zum Tankanschluß T geöffnet wird. Das Hydraulikmedium kann somit zum Tank T zurückströmen.

Der Schieber 29 ist in jeder Lage druckeingespannt. Auf seine Stirnseite 36 wirkt der Vorsteuerdruck im Hydraulikraum 37, während am Boden 59 des Innenraumes 40 der Rückführdruck wirkt. Dies dient zur besseren Nachführung des Schiebers 29 auch bei Verschmutzung und damit auch höheren Reibkräften.

Die Druckuntersetzung zwischen dem Versorgungsdruck P und dem maximalen Vorsteuerdruck im Hydraulikraum 37, der abhängig ist vom Flächenverhältnis der Fläche des Bodens 59 und der Stirnseite 36 des Schiebers 29, ist ein wesentlicher Vorteil des Magnetventils. Die Druckuntersetzung dient zur Stabilisierung des Gesamtventils trotz genügend hoher Stellkräfte am Schieber 29.

## Patentansprüche

1. Magnetventil, insbesondere Druckregelventil, mit einem Magnetanker, mit dem über einen Stößel ein Schieber gegen eine Gegenkraft verschiebbar ist,
**dadurch gekennzeichnet, daß** der Stößel (19) kleineren Querschnitt hat als die mit ihm zusammenwirkende Kolbenfläche (36) des Schiebers (29), der wenigstens einen Hydraulikraum (40) aufweist, der mit wenigstens einem Arbeitsanschluß (A) verbunden und mit einem Druckanschluß (P) verbindbar ist.

2. Magnetventil nach Anspruch 1,
**dadurch gekennzeichnet, daß** der Stößel (19) mit einer vorteilhaft in einen ventilseitigen Ankerraum (16, 26) ragenden Buchse (5) zusammenwirkt, die mit dem Magnetanker (2) verbunden ist.

3. Magnetventil nach Anspruch 2,
**dadurch gekennzeichnet, daß** der ventilseitige Ankerraum (16, 26) mit einem magnetseitigen Ankerraum (43) verbunden ist, und daß vorteilhaft die beiden Ankerräume (16, 43) durch wenigstens eine Bohrung (4, 18) im Magnetanker (2) und in der Buchse (5) miteinander verbunden sind.

4. Magnetventil nach Anspruch 2 oder 3,
**dadurch gekennzeichnet, daß** der ventilseitige Ankerraum (16, 26) durch wenigstens einen Kanal (27) mit einem mit dem Tank verbundenen Ringraum (25) verbunden ist.

5. Magnetventil nach einem der Ansprüche 1 bis 4,
**dadurch gekennzeichnet, daß** eine den Stößel (19) aufnehmende Bohrung (21) im Bereich zwischen einem Magnetteil (44) und einem Ventilteil (45) des Magnetventils über wenigstens einen vorteilhaft in eine Ringnut (23) des Stößels (19) mündenden Kanal (24) mit dem Ringraum (25) verbunden ist.

6. Magnetventil nach einem der Ansprüche 1 bis 5,
**dadurch gekennzeichnet, daß** der Arbeitsanschluß (A) in der Achse des Schiebers (29) angeordnet ist.

7. Magnetventil nach einem der Ansprüche 1 bis 6,
**dadurch gekennzeichnet, daß** der Druckanschluß (P) radial zur Achse des Schiebers (29) liegt.

8. Magnetventil nach einem der Ansprüche 1 bis 7,
**dadurch gekennzeichnet, daß** der Schieber (29), der Stößel (19) die Buchse (5) und der Magnetanker (2) koaxial zueinander liegen.

9. Magnetventil, insbesondere Druckregelventil, mit einem Magnetanker und einem Schieber, der gegen eine Gegenkraft verschiebbar ist,
**dadurch gekennzeichnet, daß** der Schieber (29) hydraulisch eingespannt ist und von einer Seite durch den Versorgungsdruck (P) und von der anderen Seite durch einen Rückführdruck belastet ist.

10. Magnetventil nach Anspruch 9,
**dadurch gekennzeichnet, daß** in den Schieber (29) ein Zusatzkolben (45) integriert ist, der einen Hydraulikraum (40) im Schieber (29) begrenzt.

11. Magnetventil nach Anspruch 10,
**dadurch gekennzeichnet, daß** die mit Hydraulikmedium beaufschlagbare Fläche (46) des Zusatzkolbens (45) kleiner ist als die mit dem Versorgungsdruck (P) beaufschlagte Stirnseite (36) des Schiebers (29).

12. Magnetventil nach Anspruch 10 oder 11,
**dadurch gekennzeichnet, daß** sich der Zusatzkolben (45) an einem Abschlußelement (34) des Gehäuses (22) des Magnetventils unter der Kraft des Rückführdruckes abstützt.

13. Magnetventil nach einem der Ansprüche 9 bis 12,
**dadurch gekennzeichnet, daß** der Druckanschluß (P) mit einem Druckraum (37) verbunden ist, in dem der Vorsteuerdruck wirkt.

14. Magnetventil nach Anspruch 13,
**dadurch gekennzeichnet, daß** der Schieber (29) mit wenigstens einer Bohrung (52) versehen ist, die den Druckanschluß (P) mit dem Druckraum (37) verbindet, der vorteilhaft mit dem Tankanschluß (T) verbindbar ist.

15. Magnetventil nach Anspruch 13 oder 14,
**dadurch gekennzeichnet, daß** in den Druckraum (37) wenigstens eine Öffnung (48) mündet, die durch ein Verschlußelement (47) des Magnetteils (44) gesteuert verschließbar ist.

16. Magnetventil nach einem der Ansprüche 13 bis 15,
**dadurch gekennzeichnet, daß** der Druckraum (37) bei geöffneter Öffnung (48) mit dem Tankanschluß (T) verbindbar ist.

17. Magnetventil nach einem der Ansprüche 14 bis 16,
**dadurch gekennzeichnet, daß** in der Bohrung (52) des Schiebers (29) eine Düse (55) vorgesehen ist.
